(19) Europäisches Patentamt
European Patent Office
Office européen des brevets

(11) EP 3 406 757 A1

(12) EUROPEAN PATENT APPLICATION

(43) Date of publication:
28.11.2018 Bulletin 2018/48

(21) Application number: 17382289.1

(22) Date of filing: 22.05.2017

(51) Int Cl.:
C23C 18/18 (2006.01)    C09D 11/52 (2014.01)
C23C 18/16 (2006.01)    C23C 18/20 (2006.01)
C23C 18/30 (2006.01)    C23C 18/40 (2006.01)
H05B 3/34 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Francisco Albero S.A.U.
08908 L'Hospitalet de Llobregat (ES)

(72) Inventors:
• Bailo Bobi, Eduardo
08908 L'HOSPITALET DE LLOBREGAT (ES)
• Medina Rodríguez, Beatriz
08908 L'HOSPITALET DE LLOBREGAT (ES)
• Blanes Guàrdia, Mireia
08908 L'HOSPITALET DE LLOBREGAT (ES)
• Ramos Pérez, Francisco Manuel
08908 L'HOSPITALET DE LLOBREGAT (ES)

(74) Representative: ZBM Patents - Zea, Barlocci & Markvardsen
Plaza Catalunya, 1 2nd floor
08002 Barcelona (ES)

(54) A PROCESS FOR PREPARING A COPPER COATED CONDUCTIVE CARBON-BASED SUBSTRATE

(57) The present invention relates to a process for preparing a copper coated conductive carbon-based substrate which comprises: (a) activating a conductive carbon-based substrate by: (a') rinsing a conductive carbon-based substrate with an acid; and (a") depositing on the rinsed conductive carbon-based substrate obtained in step (a') one or more catalytic seeds having a diameter comprised in the range from 25 to 500 $\mu$m using a printing ink catalyst composition comprising metallic particles; and (b) depositing copper on the activated conductive carbon-based substrate obtained in step (a) by electroless plating, wherein the deposition process comprises immersing the activated conductive carbon-based substrate in a copper electroless plating composition; to copper coated carbon-based substrate obtainable by this process and an electric circuit containing it.

It also relates to a printing ink catalyst composition comprising: metallic particles; a carbon-based material; and a solvent.

(A)

(B)

(C)

FIG.1

**Description**

The present invention relates to the field of printed circuit manufacture. In particular, it relates to a process for depositing copper on the surface of a conductive carbon-based substrate. It also relates to a copper coated conductive carbon-based substrate obtainable by this process, and an electric circuit containing the copper coated conductive carbon-based substrate.

**Background Art**

Heating elements (or heaters) are devices that convert electricity into heat through the process of resistive or Joule heating. Particularly, electric current passing through a heating element encounters resistance, resulting in heating of the element. Heating elements are typically made of a circuit (made of a conductive material) deposited onto a substrate, and pads that connect the heating element to the electric current source.

Commonly heating elements are film based heating elements which are generally made from a conductive material deposited onto a film type substrate. Common substrates often used for the preparation of film based heating elements are rigid materials. However, with current degree of integration within the electronics industry, heating parts need to be thinned and miniaturized in order to be easily embedded in more complex and smaller spaces. Therefore, in order to face with these needs, flexible heating elements and processes for their preparation have been developed. Flexible heating elements (or flexible heaters) are commonly formed by a flexible substrate, a circuit (i.e., a closed path, in which electrons from a voltage or current source flow) supported by the substrate and the pads that connect the flexible heating element to the electric current source.

Particularly, the substrate of the flexible heating element may be a non-conductive or a conductive material. The non-conductive substrates may include silicone rubber, polymers and polymer composite materials, and the conductive substrates commonly include carbon-based composite materials. Besides, many high electrical conductor materials have been disclosed in the state of the art for the preparation of electrical circuits such as for example aluminium or silver. Nevertheless, copper is the primary conductive material used to form the electrical circuits due to its relatively low cost, high electrical and thermal conductivity, processability, mechanical properties and stability.

Flexible heating elements have a wide range of applications where reliability, cost of effectiveness, minimum cross section, resistance to deterioration and basic flexibility are critical. Such applications may include the automotive, textile, medical, military or semiconductor industries. In particular, one application of copper circuits on a functional carbon based substrate is their use as sensors for the detection of gas, biomolecules and small organic molecules.

Commonly, one process for the preparation of flexible heating elements comprises printing a conductive metal paste onto the substrate to form a conductive layer. The conductive metal paste typically contains metallic particles dispersed in a solvent and adhesion enhancer compounds or binders. The binders improve the adhesion between the conductive metallic particles and the non-conductive flexible substrate, and contribute to the dispersion of the metallic particles thus providing the final rheological and mechanical properties for the final application onto the substrate. However, the presence of the binder compromises the conductivity and consequently, the resulting heating element capacity. Keeping this in mind, in order to obtain a better electrical conductivity, highly conductive and expensive metals such as silver are needed.

Another process for the preparation of flexible heating elements present comprises etching the flexible foil. Flexible etched foil heaters are constructed using foil as the element and chemical etching to delineate the element pattern. Advanced circuit imaging and printing combined with chemical etching allows designers the flexibility to create multiple heat patterns within a single heater.

However, in cases where the substrate is a non-conductive material, the presence of the conductive layer on the surface of the non-conductive substrate hinders the efficient deposition of the electroplating layer. This effect has been attributed to the high resistance of the conductive paste during the course of electroplating. Further, these processes are also disadvantageous because the thickness of the plating layer significantly varies due to resistance variations. Finally, these processes are not cost-effective due to the use of high amounts of metals to prepare the conductive metal layer before the copper plating.

Furthermore, flexible etched foil heaters perform poorly under mechanical stretching stress, since the circuitry presents a short life. They are damaged and crack under stress and therefore its conductivity is reduced.

Moreover, the process for obtaining the metal foils has elevated energy costs and its manufacturing is highly time-demanding. In addition, the etching process involves high amounts of metal waste due the removal of parts of the deposited metal layer. Depending on the desired final pattern, the removed material may range from a 30 to a 90% of the initially deposited metal, which goes to waste.

Therefore, from what is known in the art it is derived that there is still the need of providing a more efficient process for the preparation of flexible heating elements having higher conductivity and improved mechanical properties (the circuitry withstanding flexible stress) in a cost-effective manner.

## Summary of the Invention

The inventors of the present invention have found a more productive and economically viable process for the preparation of flexible heating elements having high electrical conductivity and good mechanical properties, such as good adhesivity and flexibility. In particular, the process is based on performing copper electroless plating onto a conductive carbon-based substrate which has been previously activated by the deposition of at least one catalytic seed of a printing ink catalyst composition.

Thus, the process of the invention allows depositing a homogeneous copper layer onto a conductive carbon-based substrate having a good conductivity using a reduced amount of a catalyst metal.

Thus, a first aspect of the invention relates to a process for preparing a copper coated conductive carbon-based substrate which comprises: (a) activation of the conductive carbon-based substrate by: (a') rinsing the carbon-based substrate with an acid; and (a") depositing on the rinsed conductive carbon-based substrate obtained in step (a') one or more catalytic seeds having a diameter comprised in the range from 25 to 500 $\mu$m of a printing ink catalyst composition comprising metallic particles; and (b) depositing copper on the activated carbon-based substrate obtained in step (a) by electroless plating, wherein the deposition process comprises immersing the activated carbon-based substrate in a copper electroless plating composition.

The second aspect of the invention relates to copper coated conductive carbon-based substrate obtainable by the process as defined in the first aspect of the invention.

The third aspect of the invention relates to an electric circuit comprising the copper coated conductive carbon-based substrate as defined in the second aspect of the invention.

And, the fourth aspect of the invention relates to a printing ink catalyst composition comprising: an amount of metallic particles comprised in the range from 0.01 to 80 %; an amount of conductive carbon-based material comprised in the range from 0.01 to 14 %; and a polar solvent having a dielectric constant higher than 15; with the proviso that when the printing ink catalyst composition is a screen printing ink catalyst composition, the composition further comprises a binder in an amount comprised in the range from 1 to 15 % by weight of the total weight of the composition.

## Brief Description of Drawings

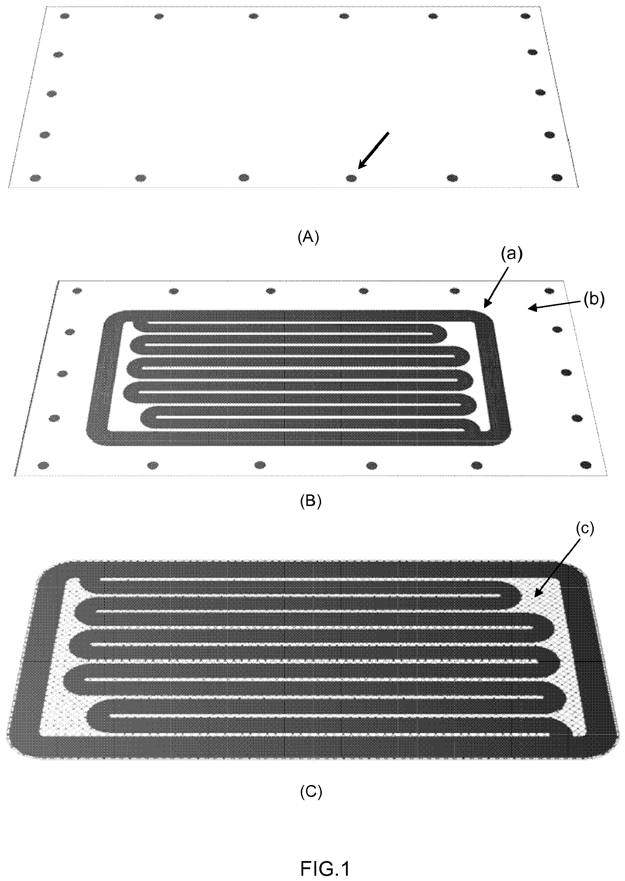

Fig. 1 Section A shows the activated conductive carbon-based substrate having the catalytic seeds of printing ink catalyst composition comprising metallic particles in an equidistant disposition around the substrate perimeter obtained in step (a") of the process of the present invention. A catalytic seed is indicated (emphasized) by a black arrow. Section B shows the layer of a dielectric material (a) deposited on the activated conductive carbon-based substrate (b) showed in section A, wherein the layer of a dielectric material (a) represents the negative image form of the copper deposition pattern, Section C shows the copper coated conductive carbon-based substrate (d) having the copper deposition pattern (c) deposited by electroless process on the negative image form of the dielectric layer (a), wherein the sacrificial part of the substrate has been removed.

## Detailed description of the invention

All terms as used in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end points of the range. Ranges given, such as temperatures, times, and the like, should be considered approximate, unless specifically stated.

The terms "screen printing", "silk-screen", "screen", "serigraphy" and "serigraph printing" have the same meaning and are used interchangeable. They refer to a printing technique that typically uses a screen made of a woven mesh onto which an ink-blocking stencil is applied. The stencil typically has openings through which the ink can penetrate the screen and be transferred onto, for example, a substrate underneath the screen. A fill blade or squeegee is typically moved across the screen stencil, forcing the ink through the mesh openings to wet the substrate during the squeegee stroke. It should be noted that the application of a print pattern onto a substrate using screen printing is not limited to the use of a woven mesh with a stencil as described above, and other screens, stencils or screen printing techniques known in the art can be used to apply a print pattern to a substrate.

The term "digital printing" refers to methods of printing from a digital-based image directly to a variety of substrates. Examples of digital printing techniques include inkjet printing and laser printing. The term "Inkjet printing" is a digital printing technique known in the art that recreates a digital image by propelling droplets of a colorant, for example, an ink onto a substrate. Typically printheads using e.g. piezoelectric crystals are used to deposit the droplets on the substrate. Generally, there are two main technologies in use in contemporary inkjet printing processes: continuous (CIJ) and Drop-on-demand (DOD). Drop on demand is a broad classification of inkjet printing technology where drops are ejected from the print head only when required. The drops are formed by the creation of a pressure pulse within the print head. The primary sub-categories within DOD, derive from the particular method used to generate this pressure pulse, namely thermal and piezoelectric (piezo). With piezo DOD, a piezoelectric crystal undergoes distortion when an electric field is applied. This distortion creates a pressure pulse in the ink chamber within the print head, which in turn, causes an ink droplet to be ejected from the nozzle onto the substrate.

The term "spray painting" or "spray coating" or "spray printing" have the same meaning and are used interchangeably. They refer to a printing/painting technique where a device sprays a coating (paint, ink, varnish, etc.) through the air onto a surface. The most common types employ compressed gas, usually compressed air, to atomize and direct the particles.

The term "percentage (%) by weight" refers to the percentage of each ingredient of the composition in relation to the total weight.

The term "weight ratio" refers to the relation in weight of a given compound to another given compound, for instance, between the reducing agent and the source of copper in the electroless plating composition needed to deposit the copper onto the carbon-based substrate.

The term "particle size" refers to the size of the metallic particles measured in $\mu$m. The measurement was performed with appropriate equipment by conventional analytical techniques such as, for example, microscopic determination utilizing a scanning electron microscope (SEM). In the present invention, the particle size was measured by a Mastersizer 2000 particle size analyzer. Such apparatus uses laser dispersion to measure the size of particles. It operates by measuring the intensity of scattered and transmitted light, as a laser beam passes through a dispersion of the sample. This data is then analysed using Mie model to calculate the size of the particles that created the scattering pattern, assuming a spherical particle shape.

The term "particle size distribution" abbreviated as "PSD" refers to the percentage of the metallic particles within a certain size range. The term "D90" refers to a particle size value within the distribution for which at least 90 % of the particles have a smaller or equal size. Further, the term "D50" refers to a particle size value within the distribution for which at least 50 % of the particles have a smaller or equal size.

The term "diameter" is the longest imaginary straight segment that passes through the centre of the seed and whose end points lie on the borders of the seed. The measurement of the diameter of the seeds of the present invention can be performed with an appropriate apparatus by conventional analytical techniques known in the state of the art. Particularly, the diameter of the seeds of the present invention was measured by optical microscopy or SEM.

The term "alkyl" refers to a saturated straight, or branched hydrocarbon chain which contains the number of carbon atoms specified in the description or claims. Examples include, among others, the group methyl, ethyl, propyl, isopropyl, butyl, isobutyl, sec-butyl, tert-butyl, n-pentyl, and n-hexyl.

The term "viscosity" of an ink refers to the resistance of a fluid to shear, also called dynamic or shear viscosity and defined mathematically as a stress-to-shear rate quotient. Usually ink viscosity is measured by using devices such as rotational viscometers or rheometers which measure the torque exerted on an axis in contact with the sample when it is rotated at a precisely controlled angular velocity. Converting torque and velocity to stress and share rate respectively is straight forward by multiplication by calibration constants. Inks typically present shear-thinning behaviour, i.e. their viscosity decreases with increasing shear, so that their viscosity is usually measured as a function of shear rate.

The term "thixotropy" refers to the hysteresis of the viscosity-shear rate or stress-shear rate curve caused by the dynamics of formation and destruction of internal weak bonding within the fluids. Usually ink thixotropy is measured by rheometers which have automatic procedures for thixotropy calculation, performing numerical integration of said curves.

The term "room temperature" refers to a temperature of the environment, which is generally comprised in the range from 20 to 25°C.

As mentioned above, the first aspect of the present invention refers to a process for preparing a copper coated conductive carbon-based substrate. The term "conductive carbon-based substrate" refers to a substrate that comprises a "conductive carbon-based material". For a "conductive carbon-based material" it is understood a conductive material that comprises carbon. In an embodiment, optionally in combination with one or more features of the various embodiments described above or below, the conductive carbon-based substrate comprises a conductive carbon-based material selected from the group consisting of carbon nanotubes, carbon nanofibres, carbon black, graphite, graphene, graphene oxide, graphite oxide and graphene reduced oxide and mixture thereof.

In particular, the first aspect of the present invention refers to a process for preparing a copper coated conductive carbon-based substrate, which firstly comprises activating the conductive carbon-based substrate (step a). Step (a) of the process of the present invention comprises firstly performing step (a') by rinsing the conductive carbon-based substrate with an acid, and secondly performing step (a") by depositing on the rinsed conductive carbon-based substrate obtained in step (a') one or more catalytic seeds having a diameter comprised in the range from 25 to 500 $\mu$m of a

printing ink catalyst composition comprising metallic particles.

The rinsing step (a') allows eliminating the impurities present in the surface of the conductive carbon-based substrate. In an embodiment, optionally in combination with one or more features of the various embodiments described above or below, in step (a') the acid is selected from the group consisting of nitric acid, sulphuric acid, chromic acid and mixture thereof. In an embodiment, optionally in combination with one or more features of the various embodiments described above or below, step (a') is performed at a temperature comprised in the range from 25 to 85°C; preferably comprised in the range from 30 to 50°C.

In an embodiment, optionally in combination with one or more features of the various embodiments described above or below, in step (a") the printing ink catalyst composition comprises metallic particles selected from the group consisting of silver, copper, palladium, nickel, ruthenium, platinum and mixture thereof; preferably the metallic particles are silver. In an embodiment, optionally in combination with one or more features of the various embodiments described above or below, in step (a") the metallic particles of the printing ink catalyst composition are in form of spherical particles, flakes, fibres, nanotubes or nanowires. In an embodiment, optionally in combination with one or more features of the various embodiments described above or below, in step (a") comprises depositing a printing ink catalyst composition which comprises particles of silver in form of spherical particles, flakes, nanotubes and roods.

The printing ink catalyst composition of step (a") can further comprises additional ingredients commonly used in printing ink compositions. Appropriate additional ingredients useful for the present invention include, but are not limited to, solvents, co-solvents, binders, dispersing agents, defoamers and thickening agents. The appropriate ingredients and their amounts can readily be determined by those skilled in the art according to the type of printing technique being used.

The solvents and co-solvents serve as dispersion medium and help to control the viscosity, to dissolve other ingredients of the composition, and to maintain wet the ink during its application. Examples of appropriate solvents and co-solvents include, but are not limited to, water, ($C_1$-$C_8$) alcohols (such as e.g. ethanol, isopropyl alcohol, *n*-butyl alcohol, *i*-butyl alcohol, *n*-pentanol), glycols (such as e.g. ethylene glycol, propylene glycol, PEG 200, PEG 400) and mixtures thereof.

The binder provides adhesion to the substrate, cohesion of the conductive material, and it also protects from external effects. Examples of appropriate binders include, but are not limited to acrylic copolymers, polyvinyl alcohols, dextrins, starches, polyethylene glycols, paraffin, polyacrylates, cellulose derivatives such as carboxymethyl cellulose or methyl cellulose, ethylene/vinyl acetate copolymer (EVA copolymer) and mixture thereof.

The dispersing agent helps to the stabilization of dispersions by separating the particles of the dispersed material avoiding settling or clumping. Dispersing agents also may reduce significantly the viscosity of the dispersion. Dispersing agents are generally selected from surfactants and polymers. In an embodiment, the dispersing agent is a surfactant selected from anionic, cationic, non-ionic or amphoteric surfactants. Examples of appropriate anionic surfactants include, but are not limited to, soaps (salts of organic carboxylic acids), alkyl benzene sulfonate, $\alpha$-olefin sulfonates, alcohol sulphates, alcohol ether sulphates, dialkylsulfosuccinates, alkyl and alkyl ethoxy sulfosuccinates, mono sulfosuccinates, alkyl ether carboxylates, alkyl and alkyl ether phosphates, petroleum sulfonates, alkane sulfonates, alkyl phenol and alkyl phenol ether sulphates, $\alpha$-sulfo methyl esters, fatty acid isothionates, acyl sarcosinates, taurides, and mixtures thereof. In a preferred embodiment, the dispersing agent is selected from the group of $C_1$-$C_{18}$ alkyl phosphates and $C_1$-$C_{18}$ alkyl ether phosphates. This group of anionic surfactant can be seen as phosphoric esters of $C_1$-$C_{18}$ alcohols or alkoxylated (i.e. ethoxylated, propoxylated or butoxylated) $C_1$-$C_{18}$ alcohols.

The defoamer agent prevents the formation of foam or removes it by penetrating the foam lamella, destabilizing it and making it burst. Defoamers contain active substances such as polysiloxanes (silicones), mineral oils, vegetable oils and/or polymers. Examples of polymer-based defoamers include modified fatty acids, polyethers or modified amides. In an embodiment, the defoamer is a polymer-based defoamer selected from ($C_1$-$C_{18}$)alkyl polyalkyleneglycol ether.

The thickening agent regulates the rheological behaviour. Examples of appropriate thickening agents include, but are not limited to poly(meth)acrylates, acylated cellulose polymers, polyvinyl acetates, partially hydrolysed polyvinyl acetates, polyvinyl alcohols, polyvinylpyrrolidones, polyoxylates, polycaprolactones, polyurethanes, polycyanoacrylates, vinyl acetate copolymers, and copolymers of lactic acid and caprolactone.

In an embodiment, optionally in combination with one or more features of the various embodiments described above or below, the deposition step (a") is carried out by printing techniques selected from the group consisting of screen printing, spray coating and ink-jet. Therefore, the printing ink catalyst composition is selected from the group consisting of screen printing ink catalyst composition, spray coating ink catalyst composition and ink-jet catalyst composition.

In an embodiment, optionally in combination with one or more features of the various embodiments described above or below, in step (a") the amount of metallic particles of the printing ink catalyst composition is comprised in the range from 0.05 to 80 % by weight of the total weight of the composition. In an embodiment, optionally in combination with one or more features of the various embodiments described above or below, wherein when the printing ink catalyst composition is a screen printing ink catalyst composition then, in step (a") the amount of metallic particles in the printing ink catalyst composition is comprised in the range from 1 to 30 % by weight. In an embodiment, optionally in combination with one or more features of the various embodiments described above or below, wherein when the printing ink catalyst composition is a spray coating ink catalyst composition then, in step (a") the amount of metallic particles of the printing ink catalyst composition is comprised in the range from 1 to 30 % by weight. In an embodiment, optionally in combination with one or more features of the various embodiments described above or below, wherein when the printing ink catalyst composition is an ink-jet catalyst composition then, in step (a") the amount of metallic particles of the printing ink catalyst composition is comprised 1 to 60 % by weight.

As it is mentioned above step (a") comprises depositing one or more catalytic seeds of the printing ink catalyst composition having a diameter comprised in the range from 25 to 500 $\mu$m. The term "seed" refers to one or more definite, limited and discrete points of depositions in any form of the printing ink catalyst composition on the conductive carbon-based substrate. It means that the printing ink catalyst composition is not deposited onto the whole surface of the carbon-based substrate, but that the printing ink catalyst composition is only deposited in form of seeds dispersed onto the surface. It can be one seed or a plurality of seeds. Generally, if a plurality of seeds is used, they are dispersed onto the whole or part of the surface in an equidistant disposition. It is advantageous because the specific distribution of the one or more catalytic seeds on the surface of the carbon-based substrate allows firstly a more efficient and uniform depositing of the copper layer onto the substrate by electroless plating methods; and secondly, reducing the cost of the process by reducing the amount of metallic particles required and thereby the amount of ink catalyst composition required (cf. Fig. 1 section A).

In an embodiment, optionally in combination with one or more features of the various embodiments described above or below, step (a") comprises depositing one catalytic seed having a diameter comprised in the range from 25 to 500 $\mu$m. In an embodiment, optionally in combination with one or more features of the various embodiments described above or below, step (a") comprises depositing two or more (a plurality) equidistant catalytic seeds between them having a diameter comprised in the range from 25 to 500 $\mu$m. The term "equidistant" refers to the fact that the distance between the seeds is the same.

In an embodiment, optionally in combination with one or more features of the various embodiments described above or below, step (a") comprises depositing one or more catalytic seeds in one or more of the corners of the carbon-based substrate; preferably in all the corners of the carbon-based substrate. In an embodiment, optionally in combination with one or more features of the various embodiments described above or below, step (a") comprises depositing a plurality equidistant catalytic seeds having a diameter comprised in the range from 25 to 500 $\mu$m in the conductive carbon-based substrate layer. In an embodiment, optionally in combination with one or more features of the various embodiments described above or below, step (a") comprises depositing one or more catalytic seeds wherein the distance from the seed to the closest end of the surface is comprised in the range from 1 to 10 mm; preferably comprised in the range from 5 to 8 mm. In an embodiment, optionally in combination with one or more features of the various embodiments described above or below, step (a") comprises depositing a plurality of equidistant catalytic seeds in the conductive carbon-based substrate perimeter, wherein the distance between the seeds is comprised in the range from 8 to 12 mm; preferably 10 mm and the distance from the seed to the closest end of the surface is comprised in the range from 8 to 12 mm; preferably 10 mm.

In an embodiment, optionally in combination with one or more features of the various embodiments described above or below, wherein when the printing ink catalyst composition is a screen printing ink catalyst composition, the diameter of the one or more catalytic seeds deposited in step (a") is comprised in the range from 150 to 500 $\mu$m. In an embodiment, optionally in combination with one or more features of the various embodiments described above or below, wherein when the printing ink catalyst composition is a spray coating ink catalyst composition, the diameter of the one or more catalytic seeds deposited in step (a") is comprised in the range from 50 to 500 $\mu$m. In an embodiment, optionally in combination with one or more features of the various embodiments described above or below, wherein when the printing ink catalyst composition is a ink-jet catalyst composition, the diameter of the one or more catalytic seeds deposited in step (a") is comprised in the range from 25 to 500 $\mu$m.

In an embodiment, optionally in combination with one or more features of the various embodiments described above or below, the process of the first aspect of the invention further comprises an additional step before step (a) which comprises preparing the "conductive carbon-based substrate" by depositing a coating of a conductive carbon-based material onto a non-conductive substrate. In an embodiment, optionally in combination with one or more features of the various embodiments described above or below, the non-conductive substrate is selected from the group consisting of a non-conductive polymer, non-conductive ceramic, and combination thereof. Examples of non-conductive polymeric substrate include, but are not limited to PET (Polyethylene terephthalate). Examples of non-conductive ceramic substrate include, but are not limited to alumina substrates ($Al_2O_3$) and yttria-stabilized zirconia substrates (YSZ). In an embodiment, optionally in combination with one or more features of the various embodiments described above or below, the process for preparing the "conductive carbon-based substrate" comprises depositing a conductive carbon-based composition having an amount of conductive carbon-base material comprising from 1 to 20 % by weight of the total weight of the composition; preferably the amount is comprise in the range from 5 and 10 % by weight. In an embodiment, optionally in combination with one or more features of the various embodiments described above or below, the process for preparing the "conductive carbon-based substrate" comprises depositing a conductive carbon-based composition having a conductive carbon-based material selected from the group consisting of carbon nanotubes, carbon nanofibres, carbon black, graphite, graphene, graphene oxide, graphite oxide, graphene reduced oxide, and mixture thereof. The conductive carbon-based composition useful for the preparation of the conductive carbon-based substrate can further comprise additional ingredients commonly used in printing ink compositions. The appropriate ingredients and their amounts can readily be determined by those skilled in the art according to the type of printing technique being used.

As mentioned above, the first aspect of the present invention refers to a process for preparing a copper coated conductive carbon-based substrate which comprises firstly (a) activating the conductive carbon-based substrate and secondly (b) depositing copper on the activated conductive carbon-based substrate obtained in step (a) by electroless plating, wherein the deposition process comprises immersing the activated conductive carbon-based substrate in a copper electroless plating composition.

The terms "electroless", "electroless plating", "electroless deposition" and "electroless plating deposition" have the same meaning and are used interchangeably. They refer to an auto catalytic chemical process used to deposit a layer of metal, particularly copper, without the use of electrical power. Basically "electroless" refers to an immersion reaction that does not use a power source to achieve a coating onto another metal surface. This is achieved by a chemical catalyst already present in the solution that generates and causes the copper to plate auto-catalytically. In particular, the deposition of copper by the electroless process of the present invention starts in one or more of the catalytic seeds and after that, the deposition process is transferred to the conductive carbon-based substrate, which continues auto-catalytically along the whole conductive surface of the substrate.

In an embodiment, optionally in combination with one or more features of the various embodiments described above or below, step (b) is performed at a temperature comprised in the range from 35 to 65°C; preferably comprised in the range from 35 to 50°C; more preferably at 55°C.

The terms "electroless plating composition" or "electroless plating bath composition" have the same meaning and are used interchangeably. They refer to the medium wherein the electroless plating takes place. As it is disclosed in the state of the art, typically a copper electroless plating bath composition contains a copper source, a reducing agent, a binder, a buffer and a solvent. Besides, the bath can also contain additional components such as complexing agents, stabilizers, brighteners, surfactants, and accelerators.

The source of copper suitable for the present invention can be any known in the state of the art of metal deposition. In an embodiment, optionally in combination with one or more features of the various embodiments described above or below, the source of copper in the electroless plating composition is a copper salt selected from the group consisting of copper(II) sulphate, copper(II) chloride, copper(II) acetate monohydrate, copper(II) nitrate and mixture thereof; preferably copper sulfate. In an embodiment, optionally in combination with one or more features of the various embodiments described above or below, the electroless plating composition comprises a stabilizing agent selected from the group consisting of 2,2'-bipidyl, 2,6-diaminopyridine, $NiSO_4 \cdot 6H_2O$, sodium dodecyl sulfate, polyalkylene glycols, for instance, polyethylene glycol (PEG), polypropylene glycol (PPG), polyalkylene copolymers for instance polyoxyethylene-polyoxypropylene copolymer (POCP), benZotriaZole (BTA) and mixtures thereof; preferably the stabilizing agent is 2,2'-bipiridyl. In an embodiment, optionally in combination with one or more features of the various embodiments described above or below, the electroless plating composition comprises a reducing agent, preferably selected from the group consisting of formaldehyde, dimethylamine borane (DMAB), sodium hypophosphite and mixtures thereof. In an embodiment, optionally in combination with one or more features of the various embodiments described above or below, the weight ratio between the reducing agent and the source of copper is comprised in the range from 1 to 10; preferably comprised in the range from 4 to 7; more preferably comprised in the range from 5 to 6.

In an embodiment, optionally in combination with one or more features of the various embodiments described above or below, the electroless plating composition comprises a buffer selected from the group consisting of hydroxides such as tetramethylammonium hydroxide (($CH_3$)$_4$NOH; TMAH), ammonium hydroxide ($NH_4OH$) and mixture thereof; preferably the buffer is NaOH. In an embodiment, optionally in combination with one or more features of the various embodiments described above or below, the amount of buffer is such as to adjust the pH of the electroless plating composition up to 11-12, preferably up to 12. In a particular embodiment, optionally in combination with one or more features of the various embodiments described above or below, the electroless plating composition comprises $CuSO_4$, NaOH to adjust pH up to 12.5; formaldehyde; 2,2'-bipiridyl, ethylenediaminetetraacetic; acid (EDTA); and water.

In an embodiment, optionally in combination with one or more features of the various embodiments described above or below, the process of the first aspect of the invention further comprises an additional step after step (b) which comprises depositing an external anti-tarnish coating, which allows coating the copper layer with a tarnish-resistant film. The application of an anti-tarnish composition onto a copper layer has been widely disclosed in the state of the art. Thus, any method disclosed in the state of the art for preparing an anti-tarnish coating onto a metal layer, particularly copper layer, can be used in the present invention. Typically, the anti-tarnish composition comprises benzotriazole, preferably in an amount comprised in the range from 0.025 to 1.5% by weight, more preferably 0.05 % by weight; potassium 1H-benzotriazolide, preferably in an amount comprised in the range from 0.025 to 1.5 % by weight; more preferably 0.05 % by weight; propan-2-ol, preferably in an amount comprised in the range from 0.05 to 5 % by weight, more preferably 1 % by weight and water; optionally the pH of the anti-tarnish composition is adjusted by the addition of a pH adjusting agent, for instance ammonia.

In an embodiment, optionally in combination with one or more features of the various embodiments described above or below, the process of the first aspect of the invention further comprises an additional step after step (b) which comprises depositing an external housing coating, which allows coating the copper layer or the tarnish resistant coating with a plastic layer. The plastic layer can be formed by for instance polyethylene terephthalate (PET), polyethylene naphthalate (PEN), polyimida or mixture thereof. The application of a plastic composition onto a copper layer or the tarnish resistant layer has been widely disclosed in the state of the art. Thus, any method disclosed in the state of the art for preparing a plastic layer coating onto a metal layer, particularly copper layer, can be used in the present invention.

In an embodiment, optionally in combination with one or more features of the various embodiments described above or below, the process of the first aspect of the invention further comprises an additional step (b') before step (a") that comprises depositing a layer of a dielectric material on the surface of the rinsed conductive carbon-based substrate obtained in step (a') in form of the negative image of the copper deposition pattern, thereby the electroless copper deposition (step b) is performed on the non-printed portion of the surface of activated carbon-based substrate obtained in step (a"). In an alternative embodiment, optionally in combination with one or more features of the various embodiments described above or below, the process of the first aspect of the invention further comprises an additional step (b") after step (a") that comprises depositing a layer of a dielectric material on the surface of the activated conductive carbon-based substrate obtained in step (a") in form of the negative image of the copper deposition pattern, thereby the electroless copper deposition (step b) is performed on the non-printed portion of the surface of activated carbon-based substrate obtained in step (a").

The above mentioned layer of a dielectric material having the form of the negative image of the copper deposition pattern is commonly named "mask layer". The mask layer covers that portion of the conductive carbon-based substrate which must not be coated by the copper layer during the electroless copper deposition. Therefore, those portions of the conductive carbon-based substrate, which are not coated by the mask layer (that is the negative image of the copper deposition pattern) are the ones that are finally coated by the copper layer during the electroless copper deposition.

When the process defined above comprises the deposition of the mask layer, the deposition of the one or more catalytic seeds of the printing ink catalyst composition is performed on the non-printed portion of the surface of activated conductive carbon-based substrate. Besides, the process further comprises removing the activating part which corresponds to the sacrificial perimeter of the substrate (cf. fig 1 section c).

The term "dielectric" refers to a layer or a material that has a very low electrical conductivity (i.e. an insulator). Particularly, such substances have electric conductivity of at least 10 million ohms per centimetre. The term "electrical resistivity" refers to a measure of how strongly a dielectric material opposes the flow of electric current. In particular, the electrical resistivity is the intrinsic property that quantifies how strongly a given substrate, layer or material opposes the flow of electric current when the substrate, layer or material is subject to a potential difference. The value of the electrical resistivity is calculated by the following equation:

$$\rho = (V \times A)/(I \times L)$$

wherein: V is the potential difference across the substrate, layer or material; A is the cross-section area; I is the electrical current flowing through it; and L is the length of the material.

Common dielectric materials appropriate for the present invention include, but are not limited to, glass, rubber, polymers, wood and cellulosic materials. Liquid dielectric materials also appropriate for the present invention include, but are not limited to, hydrocarbon oils and silicone oils.

The term "dielectric constant" refers to the ability of a dielectric medium to store electrical energy when placed in an electric field. The value of the dielectric constant is the ratio of the capacitance **'C'** of the capacitor with the dielectric medium to the capacitance '$C_0$' of the capacitor in vacuum. This constant can also be written in terms of ratio of the charges **'Q'** (with dielectric) to '$Q_o$' (in vacuum) as is shown in the following equation:

$$\epsilon_r = Q/Q_0 = C/C_0$$

The dielectric constants of many materials are known and their values can be consulted in a number of sources. The dielectric constants of solvents suitable for the present invention are disclosed in the state of the art (cf. dielectric constant Table available on May 17th 2017 in the website of Honeywellprocess.com; https://www.honeywellprocess.com/library/marketing/techspecs/Dielectric%20Constant%20Table.pdf).

In an embodiment, optionally in combination with one or more features of the various embodiments described above or below, in step (b') the dielectric material comprises a mixture of a binder and a solvent. In an embodiment, optionally in combination with one or more features of the various embodiments described above or below, in step (b')
the dielectric material comprises a binder selected from the group consisting of ethylcellulose, methylcellulose, polyethylene glycol, polyvinyl alcohol , acrylic acid, and mixtures thereof; preferably ethyl cellulose . In an embodiment, optionally
in combination with one or more features of the various embodiments described above or below, in step (b') the amount
of the binder in the dielectric material is comprised in the range from 10 to 40 % by weight; preferably comprised in the
range from 15 to 25 % by weight. In an embodiment, optionally in combination with one or more features of the various
embodiments described above or below, in step (b') the dielectric material comprises a solvent selected from the group
consisting of water, ($C_1$-$C_8$) alcohols (such as e.g. ethanol, isopropyl alcohol, *n*-butyl alcohol, *i*-butyl alcohol, *n*-pentanol),
glycols (such as e.g. ethylene glycol, propylene glycol, butyl carbitol, PEG 200, PEG 400) and mixtures thereof; preferably
butyl carbitol.

The copper coated conductive carbon-based substrate of the invention may be defined by its preparation
process as defined above and therefore, the copper coated conductive carbon-based substrate obtainable by the process
of the invention is considered part of the invention. Thus, the copper coated conductive carbon-based substrate is
obtainable by the process which comprises: (a) activating the conductive carbon-based substrate by: (a') rinsing the
conductive carbon-based substrate with an acid; and (a") depositing on the rinsed conductive carbon-based substrate
obtained in step (a') one or more catalytic seeds having a diameter comprised in the range from 25 to 500 $\mu$m of a
printing ink catalyst composition comprising metallic particles; and (b) depositing copper on the activated conductive
carbon-based substrate obtained in step (a) by electroless plating, wherein the deposition process comprising immersion
of the activated conductive carbon-based substrate in a copper electroless plating composition is also part of the invention.

For the purposes of the invention, the expressions "obtainable", "obtained" and equivalent expressions are
used interchangeably, and in any case, the expression "obtainable" encompasses the expression "obtained".

In an embodiment, optionally in combination with one or more features of the various embodiments described
above or below, the copper coated conductive carbon-based substrate obtainable by the process of the invention has
a particle size distribution of the copper particles deposited onto the carbon-based substrate comprised in the range
from 200 to 500 nm; preferably comprised in the range from 200 to 350 nm.

In an embodiment, optionally in combination with one or more features of the various embodiments described
above or below, the copper coated conductive carbon-based substrate obtainable by the process of the invention has
a thickness comprised in the range from 0.5 to 1.5 $\mu$m; preferably comprised in the range from 0.8 to 1.2 $\mu$m.

All the embodiments disclosed above for the process of the first aspect of the invention also applies to copper
coated conductive carbon-based substrates obtainable by this process.

The copper coated conductive carbon-based substrate of the present invention can be used as a part of an
electric circuit. Thus, the third aspect of the invention relates to an electric circuit comprising the copper coated conductive
carbon-based substrate, as defined in the second aspect of the invention. The term "electric circuit" refers to a closed
path, in which electrons from a voltage or current source flow.

In an embodiment, optionally in combination with one or more features of the various embodiments described
above or below, the electric circuit which comprises the copper coated conductive carbon-based substrate of the present
invention has an electrical resistivity comprised in the range from $2 \cdot 10^{-8}$ to $3 \cdot 10^{-8}$ $\Omega \cdot$m; preferably comprised in the range
from $2.5 \cdot 10^{-8}$ to $2.8 \cdot 10^{-8}$ $\Omega \cdot$m.

All the embodiments disclosed above for the process of the first aspect of the invention, as well as the copper
coated conductive carbon-based substrate of the second aspect of the invention also applies to the electric circuit of the
third aspect of the invention.

It is also part of the invention a heating element (or heater) which comprises the copper coated conductive
carbon-based substrate or the electric circuit of the present invention as defined above.

As mentioned above, the fourth aspect of the invention relates to a printing ink catalyst composition comprising:
an amount of metallic particles comprised in the range from 0.01 to 80 % by weight; an amount of conductive carbon-
based material comprised in the range from 0.01 to 14 % by weight; and a polar solvent having a dielectric constant
higher than 15; with the proviso that when the printing ink catalyst is a screen printing ink composition, the composition
further comprises a binder in an amount comprised in the range from 1 to 15 % by weight of the ink composition.

These printing ink catalyst compositions are advantageous because allow a more efficient preparation of copper
coated conductive carbon-based substrate following the process as defined in the first aspect of the invention. These
ink compositions allows preparing a homogeneous layer of copper onto a conductive carbon-based substrate with the
use of a reduced amount of metallic particles. Furthermore, these ink compositions also allow reducing the time of copper
deposition by an electroless plating method.

Besides, the printing ink catalyst compositions of the present invention are also advantageous because they
are appropriate for the most common used printing techniques such as for example screen printing, spray coating and
ink-jet. The appropriate ingredients and their amounts can readily be determined by those skilled in the art according to
the type of printing technique being used.

All the embodiments disclosed above for the metallic particles, the conductive carbon-based material, and the binder of the first aspect of the invention also applies for the printing catalytic ink composition of the fourth aspect of the invention.

In an embodiment, optionally in combination with one or more features of the various embodiments described above or below, the printing ink catalyst composition of the invention comprises an amount of metallic particles comprised in the range from 0.05 to 80 % by weight; preferably comprised in the range from 1 to 30% by weight. In an embodiment, optionally in combination with one or more features of the various embodiments described above or below, the printing ink catalyst composition of the invention comprises an amount of carbon-based material comprised in the range from 0.01 to 14 % by weight; preferably comprised in the range from 0.01 to 5 % by weight.

In an embodiment, optionally in combination with one or more features of the various embodiments described above or below, the printing ink catalyst composition of the invention comprises a polar solvent having a dielectric constant higher than 15 selected from the group consisting of water, 1,2-propanodiol, ethanol, isopropanol, ethylene glycol, polyethylene glycol, water, terpineol, and mixtures thereof.

In an embodiment, optionally in combination with one or more features of the various embodiments described above or below, the printing ink catalyst composition of the invention is a screen printing ink catalyst composition. When the printing ink catalyst composition is screen printing ink catalyst composition then, the composition further comprises a binder in an amount comprised in the range from 1 to 15 % by weight of the ink composition; preferably comprised in the range from 5 to 10 % by weight.

In an embodiment, optionally in combination with one or more features of the various embodiments described above or below, the screen printing ink catalyst composition comprises metallic particles having a particle size comprised in the range from 1 nm to 500 $\mu$m; preferably comprised in the range from 1 nm to 1 $\mu$m. In an embodiment, optionally in combination with one or more features of the various embodiments described above or below, in the screen printing ink catalyst composition comprises the silver particles; preferably silver nanotubes.

In an embodiment, optionally in combination with one or more features of the various embodiments described above or below, the screen printing ink catalyst composition comprises an amount of metallic particles comprised in the range from 1 to 60 % by weight; preferably comprised in the range from 1 to 30 % by weight. In an embodiment, optionally in combination with one or more features of the various embodiments described above or below, the screen printing ink catalyst composition comprises an amount of polar solvent as defined above which comprised in the range from 55 to 87 % by weight; preferably comprised in the range from 60 to 70% by weight. In an embodiment, optionally in combination with one or more features of the various embodiments described above or below, the screen printing ink catalyst composition comprises a sum of metallic particles and carbon-based material comprised in the range from 1 to 30 % by weight. In an embodiment, optionally in combination with one or more features of the various embodiments described above or below, the screen printing ink catalyst composition further comprises one or more dispersants as defined above in an amount comprised in the range from 1 to 5% by weight: preferably comprised in the range from 2 to 4% by weight.

In an embodiment, optionally in combination with one or more features of the various embodiments described above or below, the screen printing ink catalyst composition further comprises additional ingredients commonly used in printing ink compositions. Appropriate additional ingredients useful for the present invention include, but not limited to, solvent, co-solvent, binder, dispersing agent, defoamer and thickening agent. The appropriate ingredients and their amounts can readily be determined by those skilled in the art according to the type of printing technique being used.

In an embodiment, optionally in combination with one or more features of the various embodiments described above or below, the screen printing ink catalyst composition of the invention has a viscosity comprised in the range from 1000 to 100000 cP measured at $80^{-1}$; preferably comprised in the range from 4000 to 40000 cP measured at 80 s$^{-1}$.

In an embodiment, optionally in combination with one or more features of the various embodiments described above or below, the screen printing ink catalyst composition of the invention is a thixotropic printing ink composition; preferably from 1 to 150000 cP·s; preferably comprised in the range from 5000 to 30000 cP·s.

In an embodiment, optionally in combination with one or more features of the various embodiments described above or below, the printing ink catalyst composition of the invention is an inkjet printing ink catalyst composition. In an embodiment, optionally in combination with one or more features of the various embodiments described above or below, the inkjet printing ink catalyst composition comprises metallic particles having a particle size comprised in the range from 1 to 200 nm; preferably the particle size is comprised in the range from 1 to 50 nm. In an embodiment, optionally in combination with one or more features of the various embodiments described above or below, the inkjet printing catalyst composition comprises silver particles; preferably silver nanotubes.

In an embodiment, optionally in combination with one or more features of the various embodiments described above or below, the inkjet printing catalyst composition comprises an amount of metallic particles comprised in the range from 1 to 60 % by weight; preferably comprised in the range from 1 to 30 % by weight; more preferably comprised in the range from 2 to 20 % by weight; much more preferably comprised in the range from 5 to 15 % by weight. In an embodiment, optionally in combination with one or more features of the various embodiments described above or below, the inkjet printing ink catalyst composition comprises an amount of the conductive carbon-based material equal to 0.01 % by weight.

In an embodiment, optionally in combination with one or more features of the various embodiments described above or below, the inkjet printing ink catalyst composition comprises an amount of polar solvent having a dielectric constant higher than 15 comprised in the range from 70 to 99 % by weight; preferably comprised in the range from 80 to 98% by weight; more preferably comprised in the range from 85 to 95% by weight.

In an embodiment, optionally in combination with one or more features of the various embodiments described above or below, the inkjet printing ink catalyst composition of the invention has a viscosity comprised in the range from 3 to 25 cP measured at a shear rate of $80s^{-1}$; preferably comprised in the range from 5 to 20 cP measured at a shear rate of $80s^{-1}$; more preferably comprised in the range from 8 to 13 cP measured at a shear rate of $80s^{-1}$.

In an embodiment, optionally in combination with one or more features of the various embodiments described above or below, the inkjet printing ink catalyst composition of the invention has a surface tension comprised in the range from 15 to 40 dynes/cm; preferably comprised in the range from 20 to 35 dynes/cm.

In an embodiment, optionally in combination with one or more features of the various embodiments described above or below, the inkjet printing ink catalyst composition of the invention has a reciprocal of the Ohnersorge number (Z number) comprised in the range from 2 to 12; more preferably comprised in the range from 3 to 8. The Ohnesorge number (Oh) is a dimensionless number that relates the viscous forces to inertial and surface tension forces. The value of the Z number is calculated by using the following equation:

$$Z = \frac{\sqrt{a \cdot \rho \cdot \gamma}}{\eta}$$

wherein: $\alpha$ is the nozzle jet diameter, $p$ is the density of the ink, $\gamma$ is the superficial tension of the ink, and $\eta$ is the viscosity of the ink.

In an embodiment, optionally in combination with one or more features of the various embodiments described above or below, the printing ink catalyst composition of the invention is a sprayable printing ink catalyst composition. In an embodiment, optionally in combination with one or more features of the various embodiments described above or below, the sprayable printing ink catalyst composition comprises an amount of metallic particles comprised in the range from 0.05 to 80% by weight; preferably comprised in the range from 1 to 30% by weight. In an embodiment, optionally in combination with one or more features of the various embodiments described above or below, the sprayable printing ink catalyst composition comprises an amount of the carbon-based material comprised in the range from 0.01 to 5% by weight.

In an embodiment, optionally in combination with one or more features of the various embodiments described above or below, the sprayable printing ink catalyst composition comprises an amount of polar solvent (having a dielectric constant higher than 15) comprised in the range from 70 to 99.9% by weight; preferably comprised in the range from 95 to 99% by weight; more preferably comprised in the range from 95 to 98% by weight.

It is also part of the invention a process for the preparation of a printing ink catalyst composition of the fourth aspect of the invention, which comprises:

(i) Dispersing the metallic particles, the carbon-based material, and optionally the dispersing agent in a polar solvent having a dielectric constant higher than 15;
(ii) Drying the dispersion obtained in step (i) at a temperature comprised in the range from 60 to 90°C to obtain a solid; and
(iii) Dissolving the solid obtained in step (ii) in a polar solvent having a dielectric constant higher than 15 optionally with the additional components.

In an embodiment, optionally in combination with one or more features of the various embodiments described above or below, the process for the preparation of a printing ink catalyst composition further comprises an additional step after step (i), which comprises homogenization of the dispersion obtained in step (i). Preferably the homogenizing step is performed in a ball mill using balls of a diameter comprised in the range from 0.1 to 3 mm; preferably comprised in the range from 0.4 to 0.6 mm. In an embodiment, optionally in combination with one or more features of the various embodiments described above or below, step (ii) of the process for the preparation of a printing ink catalyst composition is performed by drying at a temperature comprised in the range from 250 to 350°C.

It is also part of the invention the use of the printing ink catalyst composition of the fourth aspect of the invention in the preparation of copper coated carbon-based substrate as defined above. Therefore, a process for preparing a copper coated carbon-based substrate which comprises: (a) activating the conductive carbon-based substrate by: (a') rinsing the conductive carbon-based substrate with an acid; and (a'') depositing on the rinsed conductive carbon-based substrate obtained in step (a') one or more catalytic seeds having a diameter comprised in the range from 25 to 500 μm

of a printing ink catalyst composition of the fourth aspect of the invention; and (b) depositing copper on the activated conductive carbon-based substrate obtained in step (a) by electroless plating, wherein the deposition process comprising immersion of the activated conductive carbon-based substrate in a copper electroless plating composition is also part of the invention.

Furthermore, the copper coated carbon-based substrate obtainable by the process which comprises: (a) activating the conductive carbon-based substrate by: (a') rinsing the conductive carbon-based substrate with an acid; and (a") depositing on the rinsed conductive carbon-based substrate obtained in step (a') one or more catalytic seeds having a diameter comprised in the range from 25 to 500 $\mu$m of a printing ink catalyst composition of the fourth aspect of the invention; and (b) depositing copper on the activated conductive carbon-based substrate obtained in step (a) by electroless plating, wherein the deposition process comprising immersion of the conductive activated carbon-based substrate in a copper electroless plating composition is also part of the invention.

Finally, an electric circuit comprising the copper coated carbon-based substrate as defined above using the printing ink catalyst composition of the fourth aspect of the invention is also part of the invention.

It is also part of the invention a heating element (or heater) which comprises the copper coated carbon-based substrate as defined above using the printing ink catalyst composition of the fourth aspect of the invention or an electric circuit which comprises the copper coated carbon-based substrate as defined above using the printing ink catalyst composition of the fourth aspect of the invention.

All the embodiments disclosed above for the preparation process for the copper coated conductive carbon-based substrate of the first aspect of the invention, the copper coated conductive carbon-based substrate obtainable by the process of the invention and the electric circuit of the third aspect of the invention also apply to the use of the printing ink catalytic composition of the fourth aspect of the invention.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

## Examples

### General considerations

Particle size is measured by means of a FE-SEM (field emission SEM) at room temperature. The microscope yields the particle size through its own data treatment software (FESEM JEDL J-7100 microscope (Cathodoluminescence spectrometry GATAN MONO-CL4, EDS Detector, backscattered electron detector)).

Viscosity measurements are performed using a TA Instruments rheometer fitted with a cone-plate measuring system. Both viscosity and thixotropy are measured at 25°C applying a cycle of successive increase of the shear rate from 0 to 150 s$^{-1}$ and then decrease from 150 to 0 s$^{-1}$.

The surface tension is obtained from contact angle measurements. The conventional contact angle measurement is carried out through a high definition optical device (for example, a high resolution video cam), wherein a predetermined drop volume is carefully located towards the target surface material (by means of a syringe) at room temperature, and the contact angle of the drop with the surface is measured by a using appropriate software (for example, SCA software from DataPhysics Instruments). The contact angle and surface tension values may be calculated for each substrate-ink system.

The ink density determination is performed by means of Archimedes' principle (physical law of buoyancy (cf. "Archimedes' principle", Encyclopaedia Britannica. Encyclopaedia Britannica online, Encyclopaedia Britannica Inc. 2017 available on May 17th 2017, in the website https://www.britannica.com/science/Archimedes-principle), which states that a body immersed in a fluid apparently loses weight by an amount equal to the weight of the fluid it displaces. A conventional precision balance is used for this purpose. The measurements are also made at room temperature.

### Example 1- Compositions

### 1.1. Conductive carbon-based compositions

The composition of the conductive carbon-based composition 1 which comprises the conductive carbon-based material is shown in Table 1, wherein the amounts of the components are expressed in weight percent:

Table 1

| Ingredients | | |
|---|---|---|
| **Function** | **Name** | **Amount (%)** |
| Conductive carbon-based material | Carbon nanofibers | 5 |
| Dispersing agent | Polyoxyethylene ethyl ether phosphate | 2 |
| Binder | Ethylene-vinyl acetate copolymer (EVA copolymer) | 6 |
| Solvent | Water | 87 |

The composition of the conductive carbon-based composition 1 was prepared by dispersing the conductive carbon-based material, the binder and the dispersing agent in water.

**1.2. Printing ink catalyst compositions**

**1.2A Screen printing ink catalyst composition**

The composition of the screen printing ink catalyst composition 1 wherein the amounts of the components are expressed in percentage by weight is shown in Table 2:

Table 2

| Ingredients | | |
|---|---|---|
| **Function** | **Name** | **Amount (%)** |
| Metallic particles | Silver nanowires | 3 |
| Carbon-based material | Carbon nanofibers | 21 |
| Anionic dispersant | Polyoxyethylene ethyl ether phosphate | 2.5 |
| solvent | 1,2-Propylene glycol | 64.5 |
| binder | Ethylene-vinyl acetate copolymer (EVA copolymer) | 5 |
| Solvent | Water | 4 |
| Solvent | Ethanol | |
| | | |
| **Rheology** | **Screen printing Ink catalyst composition 1** | |
| Viscosity | 4500 cP measured at 80 s$^{-1}$ | |
| Thixotropy | 6220 cP·s | |
| Particle size | Diameter: 70 $\pm$ 25 nm (SD) Length: 25 $\pm$ 15 $\mu$m (SD) | |
| SD: standard deviation | | |

The screen printing catalyst ink composition 1 was prepared by dispersing in ethanol, a combination of the silver nanowires and the carbon nanofibers using a pearl mill with balls sized 0.3 mm in a quantity such as to obtain a filling factor of 50 %. Milling speed was 1000 rpm and milling duration was 90 min. Later, the polyoxyethylene alkyl ether phosphate was added. The resulting slurry was dried at 300°C in an oven for two hours. The dried material was milled in a planetary ball mill during 30 min with 1,2-propylene glycol, ethylene-vinyl acetate copolymer, polyoxyethylene alkyl ether phosphate and water.

**1.2B Inkjet printing catalyst compositions**

In Table 3 below the composition of the inkjet printing catalyst compositions is shown wherein the amount of the components are expressed in percentage by weight:

Table 3

| Ingredients | | Inkjet composition 1 | Inkjet composition 2 | Inkjet composition 3 |
|---|---|---|---|---|
| Function | Name | (%) | (%) | (%) |
| Metallic particles | Silver nanoparticles [a] | 8 | 18.45 | - |
| | Palladium black | - | - | 2 |
| Carbon-based material | Carbon nanotube [b] | 5 | 5 | 5 |
| solvent | Ethylene glycol | 65.2 | 52.5 | 63.06 |
| solvent | Isopropyl alcohol | 10 | 8 | 9.61 |
| Solvent | Glycerol | 12.4 | 11 | 13.23 |
| solvent | Ethylene glycol monopropyl ether | 12.4 | 10 | 12.05 |
| (a) Commercially available as Ag-V03 from Metalor (b) Commercially available as GANF from Antolin | | | | |

| Rheology | | Inkjet composition 2 |
|---|---|---|
| Viscosity | (cP measured at $80s^{-1}$) | 11.5 |
| Surface tension | (dynes/cm) | 33 |
| Density | (g/cm$^3$) | 2.1 |
| Nozzle diameter | ($\mu$m) | 21 |
| Z number | | 3.32 |

The inkjet ink catalyst compositions of the present invention were prepared by dispersing the metallic nanoparticles and the carbon nanotubes in the solvent medium composed by ethylene glycol, isopropyl alcohol, glycerol and ethylene glycol monopropyl ether using a probe-type ultrasonicator. The amount of each ingredient is that disclosed in Table 3 above.

### 1.2C Sprayable printing ink catalyst composition

The composition of the sprayable ink catalyst composition 1 wherein the amounts of the components are expressed in percentage by weight is shown in Table 4 below:

Table 4

| Ingredients | | Sprayable composition 1 |
|---|---|---|
| Function | Name | (%) |
| Metallic particles | Silver nanoparticles | 2 |
| Carbon-based material | Carbon nanofibers | 0.01 |
| solvent | Ethanol | 97.99 |

The sprayable ink catalyst composition 1 of the present invention was prepared by dispersing the metallic nanoparticles and the carbon nanofibers in the solvent. The amount of each ingredient is that disclosed in Table 4 above.

### 1.3 Dielectric composition

The composition of the dielectric composition 1 wherein the amounts of the components are expressed in percentage by weight is shown in Table 5 below:

Table 5

| Ingredients | | |
| --- | --- | --- |
| Name | Function | Amount(%) |
| Ethyl cellulose | Binder | 20 |
| Butyl carbitol | Solvent | 80 |

The process for the preparation of the dielectric composition is performed by dissolving ethyl cellulose in butyl carbitol. The amount of each ingredient is that disclosed in Table 5 above.

### 1.4 Copper electroless Bath 1

The composition of the electroless bath 1 wherein the amounts of the components are expressed in grams (g) and the amount of water is expressed in $cm^3$ is shown in Table 6 below:

Table 6

| Ingredients | | Bath 1 |
| --- | --- | --- |
| Name | Function | |
| $CuSO_4$ | Metallic Salt | 2g |
| EDTA[a] | Quelating agent | 33g |
| NaOH | pH adjusting agent | q. s. for pH 12.5 [b] |
| HCHO | Reducing agent | 5g |
| 2,2'-bipidyl | Stabilizing agent | 0.01g |
| Water | solvent | $1000cm^3$ |
| (a) EDTA stands for ethylenediaminetetraacetic acid. (b) q. s. stands for quantity sufficient. | | |

The process for the preparation of the electroless bath 1 is performed by adding the components mentioned in the Table 6 above under constant and vigorous stirring in the following sequence: adding to a 500 $cm^3$ of deionized water, $CuSO_4$ and EDTA, followed by the addition of NaOH until reaching a pH of 12.5. Then, formaldehyde, 2,2'-bipyridyl and water until 1000 $cm^3$ were finally added. The electroless bath 1 was maintained in constant stirring using a magnetic stirrer at a temperature of 50°C.

### 1.5 Anti-tarnish and sealing composition 1 (anti-tarnish bath 1)

The composition of the anti-tarnish bath 1 wherein the amount of the components are expressed in percentage by weight is shown in Table 7 below

Table 7

| Ingredients | | Bath 1 |
| --- | --- | --- |
| Name | Function | |
| Benzotriazol | Anti tarnish agent | 0.05% |
| Potassium 1H-benzotriazolide | Anti tarnish agent | 0.05% |
| Propan-2-ol | Solvent | 1% |

(continued)

| Ingredients | | Bath 1 |
| --- | --- | --- |
| **Name** | **Function** | |
| Ammonia | pH Regulating | q.s. for pH 8.7[(a)] |
| | agent | |
| Water | Solvent | q.s. 100% [(a)] |
| (a) q. s. stands for quantity sufficient. | | |

The anti-tarnish bath 1 was prepared by the following method: a solution of the water and propan-2-ol in the percentage mentioned in table 7 above is prepared. Then, benzotriazol and potassium 1 H-benzotriazolide were added to the previous solution; and finally, the pH was adjusted by the addition of ammonia to the solution previously obtained.

**Example 2- copper coated carbon-based substrate**

**2.1. Screen printing**

**2.1.1. Using screen printing Ink catalyst composition 1**

**A. Preparation of the activated carbon-based substrate**

(i) Preparation of the carbon-based substrate: Slurry of the conductive carbon-based composition 1 disclosed in Example 1 was dispersed during 24 hours in a pearl mill under vacuum. Afterwards, the mixture was submitted to constant stirring for one week. The resulting slurry was tape cast on a silicone-coated PET substrate and dried at about 70°C by using heaters integrated in the bench of the casting machine and IR emitters under its hood.

(ii) Rinsing step: Once the conductive carbon-based substrate was dried, it was submerged during 10 min in a 20 % $HNO_3$ solution at 40°C to clean and remove impurities with the aid of constant stirring to obtain the rinsed carbon-based substrate 1.

(iii) Shielding of the negative circuitry pattern: The dielectric composition 1 disclosed in Example 1 was deposited in those areas of the surface of the rinsed carbon-based substrate 1 obtained in step (ii) where the copper plating is not desirable. Therefore, the dielectric composition 1 is deposited in the form of the negative image of the copper deposition pattern (cf. Fig 1 section B). A screen of 325 mesh and 6 N of pressure was used to transfer the negative image pattern in the form of copper plating pattern.

(iv) Activating step: Using a 230 mesh screen and 8 N of pressure, the screen printing ink catalyst composition 1 was deposited on the shielded and rinsed conductive carbon-based substrate obtained in step (iii) by screen printing in a pattern of seeds of 100 micron of diameter, around the perimeter of the surface of the substrate, being 1 cm the separation between seeds and 10 mm that between the seeded area at the closest end of the surface (cf. Fig 1 section A).The printed circles were then dried at 80°C for 5 min.

**B. Copper electroless plating deposition**

(v) copper electroless deposition: the activated conductive carbon-based substrate obtained in step (iv) was immersed in the copper electroless plating composition 1 disclosed in Example 1 in constant stirring using a magnetic stirrer at a temperature of 50°C during 35 min. After this time, the surface of the conductive carbon-based substrate not coated by the shielded negative image pattern was completely coated by a copper layer.

**C. Anti-tarnish and selling step**

(vi) the copper conductive carbon-based substrate obtained in step (v) was rinsed for 5 minutes with deionized water at room temperature and then the rinsed substrate was immersed in the anti-tarnish bath 1 disclosed in Example 1 in constant stirring at 500 rpm. for 10 minutes at a temperature of 55°C.

**D. Housing step**

(vii) the anti-tarnished copper conductive carbon-based substrate obtained in step (vi) was plasticized by the deposition on the surface of the anti-tarnish layer of a polyimide polymer layer. The process was performed by the use of a lamination machine applying a pressure of 5000 psis at a temperature of 65°C for 30 min.

**2.1.2. Using commerical ink DuPont 5064H**

A copper coated conductive carbon-based substrate was prepared by the deposition of the commercial ink DuPont 5064H that comprises metallic particles by screen printing following the same process as disclosed above in section 2.1.1. being the metallic concentration of 65% in weight of this commercial ink DuPont 5064H instead of the screen printing ink catalyst composition 1.

**2.2. inkjet**

The inkjet copper coated conductive carbon-based substrate was prepared following the same process as disclosed above in section 2.1.1 for the screen printing method with the difference that (iv) comprises printing the inkjet catalytic composition 1 instead of the screen printing ink catalytic composition 1 under the following conditions: a 21 $\mu$m nozzle printhead was used to deposit the inkjet catalyst composition 1 in form of lines of 25 $\mu$m width in the center of the uncoated surface of the rinsed conductive carbon-based substrate obtained in step (iii), later the printing lines were dried at 100°C during 10 min.

**Example 3. Distribution and structure characterization of the copper coated conductive carbon-based substrate**

The distribution and structural characterization of the coated conductive carbon-based substrate obtained by the deposition of copper onto a conductive carbon-based substrate following the process of the present invention as disclosed in Example 2 is shown in Table 8 below:

Table 8

| Copper deposition method | | | Copper deposition layer | | |
|---|---|---|---|---|---|
| Technique | Catalyst ink | Example | Distribution of the copper deposition layer | Copper particle size distribution (nm) | Thickness of the copper layer ($\mu$m) |
| Screen printing | DuPont 5064H | Ex. Section 2.1.2. | Homogeneous | 200-500 | 1±0.2 |
| Screen printing | Screen printing ink catalyst Composition 1 | Ex. Section 2.1.1. | Homogeneous | 200-500 | 1±0.2 |

As it is shown in Table 8, the process of the invention allows depositing on the surface of the carbon-based material, even in the cases of complex patterns, a homogeneous layer of copper having the appropriate thickness and containing copper particles having an appropriate particle size distribution to be used to form the tracks of an electric circuit (see section 4 below).

**Example 4. Electrical conductivity of an electric circuit containing the copper coated conductive carbon-based substrate**

Method

The measurement of the electrical conductivity was performed by testing the prototypes at room temperature by four-terminal sensing and measured by the use of an I-V (intensity-voltage) source. This method is an electrical impedance measuring technique that uses separate pairs of current-carrying and voltage-sensing electrodes to make more accurate measurements.

Results

The measure of the ability of an electric circuit containing the copper coated conductive carbon-based substrate obtained by the process of the present invention to conduct an electric current (i.e. the electrical conductivity) is shown in Table 9 below:

Table 9

| Copper Deposition method | | | Electrical conductivity ($\Omega \cdot$m) |
|---|---|---|---|
| Technique | Catalyst ink | Example number | |
| Screen printing | DuPont 5064H | Ex. Section 2.1.2. | $2.5 \pm 0.3 \cdot 10^{-8}$ |
| Screen printing | Screen printing ink catalyst Composition 1 | Ex. Section 2.1.1. | $2.5 \pm 0.3 \cdot 10^{-8}$ |

As it can be seen the electrical conductivity of the copper coated conductive carbon-based substrates obtained by the process of the present invention, is comparable with that of bulk copper (t $1.7 \cdot 10^{-8} \Omega \cdot$m).

**Citation List**

1. "Archimedes' principle", Encyclopaedia Britannica. Encyclopaedia Britannica online, Encyclopaedia Britannica Inc. 2017 available on May 17th 2017, in the website https://www.britannica.com/science/Archimedes-principle.

2. "Dielectric constant Table" available on May 17th 2017 in the website of Honeywellprocess.com; https://www.honeywellprocess.com/library/marketing/tech-specs/Dielectric%20Constant%20Table.pdf.

**Claims**

1.  A process for preparing a copper coated conductive carbon-based substrate which comprises:

    (a) activating the conductive carbon-based substrate by:

        (a') rinsing the conductive carbon-based substrate with an acid; and
        (a") depositing on the rinsed conductive carbon-based substrate obtained in step (a') one or more catalytic seeds having a diameter comprised in the range from 25 to 500 $\mu$m, using a printing ink catalyst composition comprising metallic particles; and

    (b) depositing copper on the activated conductive carbon-based substrate obtained in step (a) by electroless plating, wherein the deposition process comprises immersing the activated conductive carbon-based substrate in a copper electroless plating composition.

2.  The process according to claim 1, wherein the conductive carbon-based substrate comprises a conductive carbon-based material selected from the group consisting of cabon nanotubes, carbon nanofibres, carbon black, graphite, graphene, graphene oxide, graphite oxide, graphene reduced oxide and mixtures thereof.

3. The process according to any of the claims 1-2, wherein the metallic particles are selected from the group consisting of silver, copper, palladium, nickel, ruthenium, platinum and mixtures thereof.

4. The process according to any of the claims 1-3, wherein the printing ink catalyst composition has an amount of metallic particles comprised in the range from 0.05 to 80 % by weight of the total weight of the composition.

5. The process according to any of the claims 1-4, wherein in step (a') the acid is selected from the group consisting of nitric acid, sulphuric acid, chromic acid and mixtures thereof.

6. The process according to any of the claims 1-5, wherein in step (a") the printing ink catalyst composition comprising metallic particles having a particle size comprised in the range from 1 nm to $1\mu$m.

7. The process according to any of the claims 1-6, wherein when step (a") comprises depositing two or more catalytic seeds of the catalyst composition, the catalytic seeds are distributed equidistantly.

8. The process according to any of the claims 1-7, wherein the deposition of step (a") is carried out by a printing technique selected from the group consisting of screen printing, spray coating and inkjet printing.

9. The process according to any of the claims 1-8, wherein the process further comprises: an additional step (b') before step (a") that comprises depositing a layer of a dielectric material on the surface of the rinsed conductive carbon-based substrate obtained in step (a') in form of the negative image of the copper deposition pattern; or alternatively an additional step (b") after step (a") that comprises depositing a layer of a dielectric material on the surface of the activated conductive carbon-based substrate obtained in step (a") in form of the negative image of the copper deposition pattern.

10. The process according to any of the claims 1-9, wherein the process further comprises an additional step before step (a), which comprises preparing the conductive carbon-based substrate by depositing a coating of a conductive carbon-based composition onto a non-conductive substrate.

11. The process according to any of the claims 1-10, wherein the process further comprises an additional step after step (b), which comprises depositing an external anti-tarnish coating.

12. The process according to any of the claims 1-11, wherein the printing ink catalyst composition of step (a") is a printing catalytic ink composition comprising: an amount of metallic particles comprised in the range from 0.01 to 80 % by weight; an amount of carbon-based material comprised in the range from 0.01 to 14 % by weight; and a polar solvent having a dielectric constant higher than 15; with the proviso that when the printing ink catalyst is a screen printing ink catalyst composition, the composition further comprises a binder in an amount comprised in the range from 1 to 15% by weight of the total weight of the composition.

13. A copper coated conductive carbon-based substrate obtainable by the process as defined in any of the claims 1-12.

14. An electric circuit comprising the copper coated conductive carbon-based substrate as defined in claim 13.

15. A printing ink catalyst composition comprising:

an amount of metallic particles comprised in the range from 0.01 to 80 % by weight; an amount of conductive carbon-based material comprised in the range from 0.01 to 14 % by weight; and
a polar solvent having a dielectric constant higher than 15;
with the proviso that when the printing ink catalyst composition is a screen printing ink catalyst composition, the composition further comprises a binder in an amount comprised in the range from 1 to 15 % by weight of the total weight of the composition.

(A)

(B)

(C)

FIG.1

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 475 867 B2 (FUKUI)<br>2 July 2013 (2013-07-02)<br>* column 2, line 6 - column 4, line 30 *<br>* figures 1-4 * | 1-15 | INV.<br>C23C18/18<br>C09D11/52<br>C23C18/16<br>C23C18/20 |
| A | US 7 981 508 B1 (SHARMA SUNITY [US] ET AL)<br>19 July 2011 (2011-07-19)<br>* column 1, line 61 - column 3, line 22 *<br>* column 4, line 64 - column 5, line 60 *<br>* column 7, line 2 - column 11, line 10 *<br>* figures 1-4 * | 1-15 | C23C18/30<br>C23C18/40<br>H05B3/34 |
| X | JP 2003 062926 A (GO SOGO KENKYUSHO KK; NAKAMURA KUNIO) 5 March 2003 (2003-03-05)<br>* paragraphs [0005] - [0016]; figures 1-4 * | 13,14 | |
| X | JP 2000 311527 A (SUMITOMO OSAKA CEMENT CO LTD) 7 November 2000 (2000-11-07)<br>* paragraphs [0012] - [0013], [0020] - [0030] * | 15 | |
| X | WO 2016/135722 A1 (EMEFCY LTD [IL])<br>1 September 2016 (2016-09-01)<br>* page 16, lines 16-30 * | 15 | TECHNICAL FIELDS SEARCHED (IPC)<br><br>C23C<br>C09D<br>H05B |

The present search report has been drawn up for all claims

| Place of search | Date of completion of the search | Examiner |
|---|---|---|
| The Hague | 7 November 2017 | Crottaz, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-15

   A process for preparing a copper coated conductive carbon-based substrate which comprises:(a) activating the conductive carbon-based substrate by:(a') rinsing the conductive carbon-based substrate with an acid; and(a") depositing on the rinsed conductive carbon-based substrate obtained in step (a') one or more catalytic seeds having a diameter comprised in the range from 25 to 500IJ m, using a printing ink catalyst composition comprising metallic particles; and(b) depositing copper on the activated conductive carbon-based substrate obtained in step (a) by electroless plating, wherein the deposition process comprises immersing the activated conductive carbon-based substrate in a copper electroless plating composition.
   A copper coated conductive carbon-based substrate obtainable by the process as defined above or an electric circuit comprising the copper coated conductive carbon-based substrate as defined above

   1.1. claim: 15

   A printing ink catalyst composition comprising:an amount of metallic particles comprised in the range from 0.01 to 80 % by weight; an amount of conductive carbon-based material comprised in the range from 0.01 to 14 % by weight; anda polar solvent having a dielectric constant higher than 15;with the proviso that when the printing ink catalyst composition is a screen printing ink catalyst composition, the composition further comprises a binder in an amount comprised in the range from 1 to 15 % by weight of the total weight of the composition.
   ---

Please note that all inventions mentioned under item 1, although not necessarily linked by a common inventive concept, could be searched without effort justifying an additional fee.

EP 3 406 757 A1

## ANNEX TO THE EUROPEAN SEARCH REPORT
## ON EUROPEAN PATENT APPLICATION NO.

EP 17 38 2289

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2017

| Patent document cited in search report | | Publication date | Patent family member(s) | | Publication date |
|---|---|---|---|---|---|
| US 8475867 | B2 | 02-07-2013 | CN | 101754585 A | 23-06-2010 |
| | | | US | 2010129532 A1 | 27-05-2010 |
| US 7981508 | B1 | 19-07-2011 | US | 7981508 B1 | 19-07-2011 |
| | | | US | 8911608 B1 | 16-12-2014 |
| | | | US | 2011174524 A1 | 21-07-2011 |
| JP 2003062926 | A | 05-03-2003 | NONE | | |
| JP 2000311527 | A | 07-11-2000 | JP | 3614707 B2 | 26-01-2005 |
| | | | JP | 2000311527 A | 07-11-2000 |
| WO 2016135722 | A1 | 01-09-2016 | NONE | | |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Archimedes' principle. Encyclopaedia Britannica. Encyclopaedia Britannica online, Encyclopaedia Britannica Inc, 17 May 2017

- *Dielectric constant Table,* 17 May 2017, https://www.honeywellprocess.com/library/marketing/tech-specs/Dielectric%20Constant%20Table.pdf